# EUROPEAN PATENT SPECIFICATION

(11) **EP 3 311 638 B1**
(45) Date of publication and mention of the grant of the patent: **01.12.2021**
(21) Application number: 17195618.8
(22) Date of filing: 10.10.2017
(51) Int. Cl.: A01B 33/02, A01D 34/68

(54) **FARMING MACHINE**
LANDWIRTSCHAFTLICHE MASCHINE
MACHINE AGRICOLE

(30) Priority: 20.10.2016 IT 201600105784
(43) Date of publication of application: 25.04.2018
(73) Proprietor: Eurosystems S.p.A., 42045 Luzzara (Reggio Emilia) (IT)
(72) Inventor: BOVI, Fabio, 42045 LUZZARA (RE) (IT)
(74) Representative: Corradini, Corrado

(56) References cited:
- EP-A1- 2 100 491
- WO-A2-02/09496
- DE-U1-202009 014 994
- FR-A1- 2 463 042

## Description

### TECHNICAL FIELD

The present invention concerns a farming machine. More specifically, the present invention concerns a farming machine, like for example a cultivator, with which it is possible to associate a plurality of tools for working the ground.

### PRIOR ART

As known, a cultivator is a multifunctional farming machine configured to be manoeuvred by a driver that walks on foot, which comprises an internal combustion engine (running on petrol or diesel) adapted for actuating the power take-off with which it is possible to associate a plurality of tools for working the ground, like for example cutters, ploughs, cutting bars or other.

Generally, between the internal combustion engine and the power take-off, the cultivator comprises a clutch that allows the selective transmission of motion to the tool.

A drawback of such a solution consists of the fact that, when the clutch is actuated to decouple the motor from the tool, the mobile parts of the latter can proceed by inertia in their rotation, with the risk of creating imprecision in the work or even danger for the safety of the user of the machine.

In DE202009014994 a cultivator is disclosed having a discontinuous speed gearbox capable of disengaging the power take-off from the engine and having means for reducing the torque at an output shaft of the gearbox when it disengages the power take-off from the engine.

However, such solution is complex and bulky, and moreover the use of such discontinuous speed gearbox introduces a change in a gear ratio between the angular velocity of an output shaft of the motor and the angular velocity of a shaft of the power take-off, when it engages the power take-off to the motor.

A purpose of the present invention is to overcome those drawbacks of the prior art, in a simple, rational and low-cost solution.

Such purposes are achieved by the characteristics of the invention given in the independent claim. The dependent claims outline preferred and/or particularly advantageous aspects of the invention.

Thanks to such a solution, whenever the power take-off is decoupled from the motor, the braking means allow the power take-off to be stopped in a short time and in a stable position, thus overcoming the drawback of the prior art.

According to the invention, the braking means are configured to automatically start working when the clutch is in the second position.

In this way, it is ensured that the power take-off stops automatically, irrespective of possible distractions or carelessness of the operator of the farming machine.

The invention foresees that the clutch comprises in particular: an input shaft connected to the motor, an output shaft connected to the power take-off, at least one driven disc rotating as a unit with the output shaft, at least one friction disc rotating as a unit with the input shaft, and first actuation means for pressing the driven disc against the friction disc.

Thanks to such a solution a clutch is provided that is simple, easy to make and has a high degree of reliability.

In this context, the braking means can comprise: a braking disc fixed to the support frame, and second actuation means adapted for moving the driven disc away from the friction disc and pressing it against the braking disc.

In this way it is possible, with a single driven disc, to obtain both the coupling/decoupling function of the shafts of the clutch and the braking function of the output shaft, thus making it possible to make a clutch equipped with a brake, which is compact and low-cost.

According to another aspect of the invention, the first actuation means can comprise a pressure plate adapted for rotating as a unit with the output shaft and control members (actuated manually) adapted for moving said pressure plate in a direction parallel to the axis of the output shaft.

The second actuation means can, on the other hand, simply comprise at least one spring adapted for exerting a force in a direction parallel to the output shaft.

In this way a reverse clutch is provided, i.e. one that remains in the decoupled position of the input and output shafts when it is not actively actuated by the user, so that when the clutch is released, the power take-off immediately stops receiving drive torque and the braking means automatically start acting. According to another aspect of the invention, the clutch can comprise a plurality of further driven discs rotating as a unit with the output shaft and separated two-by-two by means of at least one friction disc rotating as a unit with the input shaft.

Thanks to such a solution, a clutch is provided having a smaller radial bulk than a single-disc clutch capable of transmitting the same maximum torque values.

According to a further aspect of the invention, the friction discs can be housed inside a coaxial containment bell fixedly connected to the input shaft.

In this way, accidental contacts of the rotating members of the clutch with other devices of the farming machine are avoided.

According to another aspect of the invention, the input shaft can have an axial cavity and at least one portion of the output shaft can be rotatably contained in said axial cavity of the input shaft.

In this way, the bulk of the clutch is advantageously reduced and it is possible to position both of the shafts on the same side of the farming machine.

According to a further aspect of the invention, the farming machine can comprise at least one hooking and locking apparatus of a tool on the support frame.

Thanks to such a solution the step of hooking and fixing the tool to the farming machine is made easier.

According to another aspect of the invention, the hooking and locking apparatus can comprise at least one hook adapted for occupying a raised position, in which it is adapted for hooking a first abutment element of the tool keeping an engagement shaft of the tool separate from the power take-off, and control means adapted for moving the hook from said raised position to a lowered position, carrying along the tool so as to connect the engagement shaft to the power take-off.

Thanks to this solution it is possible to mechanically and precisely hook the tool to the farming machine.

According to a further aspect of the invention, the hooking and locking apparatus can comprise at least one lower guide adapted for receiving a second abutment element of the tool so as to keep the engagement shaft coaxial to the power take-off when the hook is in raised position, and adapted for guiding the carrying of the tool during the movement of the hook from the raised position to the lowered position.

In this way, the perfect coaxial positioning of the engagement shaft is ensured without the operator of the farming machine having to make any adjustment operation, thus speeding up the installation operations of the tool.

According to another aspect of the invention, the hooking and locking apparatus can comprise at least one upper guide adapted for receiving the first abutment element of the tool and guiding it towards the hook, when the hook is in raised position.

Thanks to such a solution, to position the first abutment element inside the hook, it is sufficient to move the farming machine towards the tool, positioning the upper guide under the first abutment element, thus speeding up the installation operations of the tool.

According to a further aspect of the invention, the upper guide can comprise a throat adapted for cooperating with the hook so as to make a shape constraint that locks the first abutment element to the support frame, when the hook is in the lowered position.

In this way, when the hook is in the lowered position the tool is firmly constrained to the frame of the farming machine.

According to another aspect of the invention, the control means can be manually actuated.

In this way, control means are provided that are simple, reliable and costeffective.

According to a further aspect of the invention, the control means can comprise a flexible cable adapted for being pulled to move the hook from the raised position to the lowered position.

Thanks to such a solution, the control means is extremely simple, cost-effective and easy to use.

According to another aspect of the invention the control means comprise a spring adapted for moving the hook from the lowered position to the raised position.

In this way, when the control of the hook is not acted upon, it tends to automatically go back into the raised position allowing a simple release of the tool.

According to a further aspect of the invention, said flexible cable and said spring can be hooked to a lever pivoted to the hook and to the support frame according to two parallel and spaced axes.

According to another aspect of the invention, the hooking and locking apparatus comprises at least one slot formed in the support frame with which the hook is slidably associated, movable along an axis substantially parallel to the axis of the output shaft.

Thanks to such a solution, a simple mechanism is provided that forces the hook to move along a direction substantially parallel to the axis of the output shaft between the lowered position and the raised position.

According to a further aspect of the invention, the farming machine can comprise at least two of said hooking and locking apparatuses able to be actuated by the same control means.

In this way, the overall hooking and locking apparatus is more rigid and allows more precise positioning of the engagement shaft and more solid locking of the tool to the farming machine.

It should be highlighted here that the hooking and locking system outlined above could also be applied to a farming machine, for example a cultivator, which does not have braking means of the power take-off.

### BRIEF DESCRIPTION OF THE DRAWINGS

Further characteristics and advantages of the invention will become clear from reading the following description provided as an example and not for limiting purposes, with the help of the figures illustrated in the attached tables.
Figure 1 is a perspective view of a farming machine according to the invention on which a tool for working the ground is installed.
Figure 2 is a partial exploded view of figure 1.

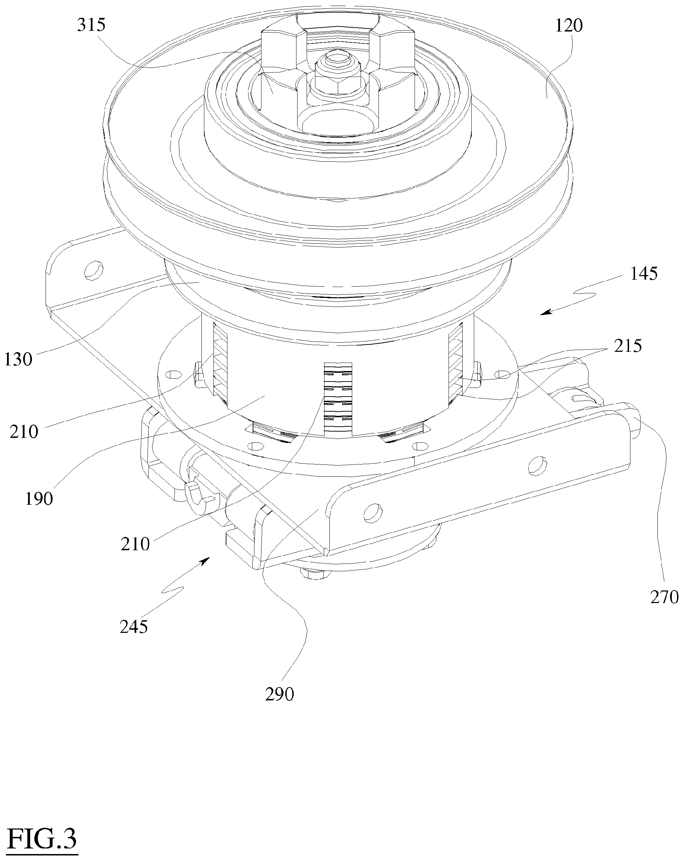

Figure 3 is a perspective view of a clutch of the farming machine represented in the previous figure.
Figure 4 is a section view of the clutch of figure 3 in a first operative position.
Figure 5 is a section view of a portion of the farming machine with the clutch in a second operative position.

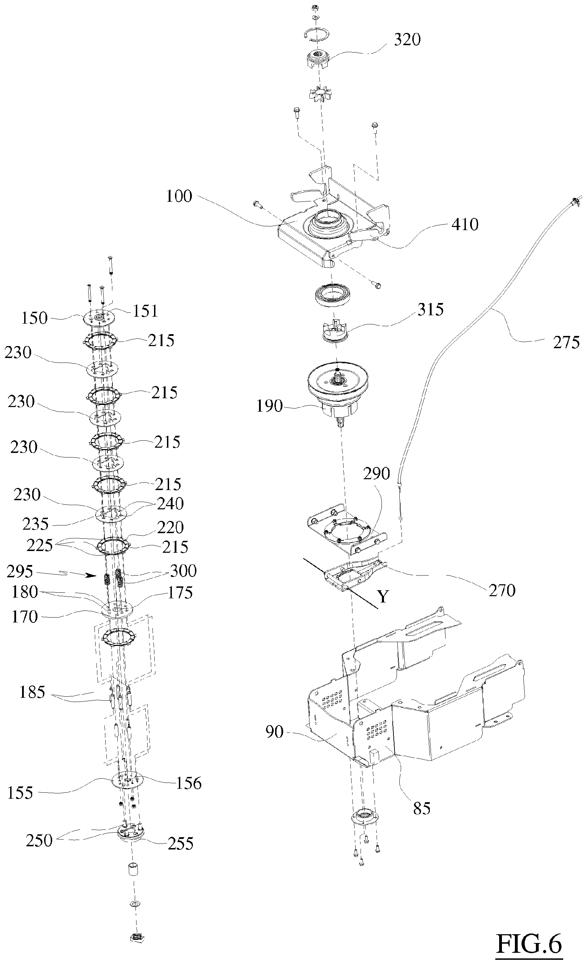

Figure 6 is an exploded view of the portion of farming machine of figure 5.
Figure 7 is a section view of a portion of the farming machine and of the tool in which a hooking and locking apparatus of the tool on the farming machine is in a first operative position.
Figure 8 is a section view of the elements of figure 7 in which the hooking and locking apparatus is in a second operative position.
Figure 9 is a perspective view of the hooking and locking apparatus arranged in the first operative position
Figure 10 is a perspective view of the hooking and locking apparatus arranged in the second operative position.
Figure 11 is another perspective view of the hooking and locking apparatus.
Figure 12 is a further perspective view of the hooking and locking apparatus.
Figure 13 is a diagram that illustrates the step of positioning the tool on the farming machine.

### DETAILED DESCRIPTION

With particular reference to such figures, a farming machine with which it is possible to associate at least one tool 15 for working the ground has been globally indicated with 10.

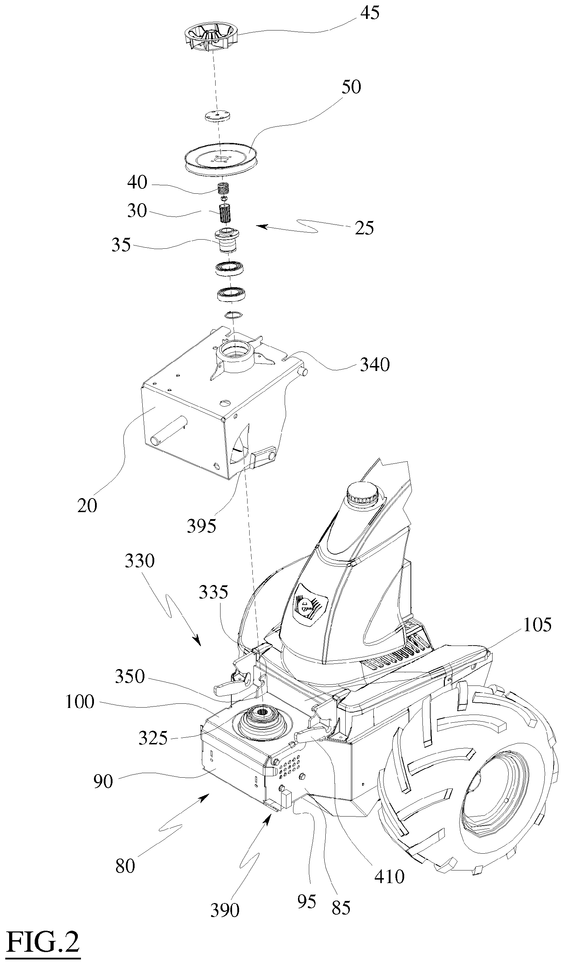

The tool 15 can generally be equipped with a support case 20 and with an engagement shaft 25 rotatably associated with the support case 20, for example through a pair of bearings (see fig.2).

The engagement shaft 25 comprises a first cylindrical body 30 equipped with an outer grooved profile and a second hollow cylindrical body 35 in which the first cylindrical body 30 is housed.

The engagement shaft 25 also comprises a spring 40 configured to make the first cylindrical body 30 project from the second cylindrical body 35.

The tool 15 also comprises a pulley 45 fitted to the engagement shaft 25, for example fitted to the second cylindrical body 35, through which it is possible to transmit the motion to work tools (not illustrated), like for example cutters, ploughs, cutting bars or other.

The tool 15 can finally comprise a cooling fan 50 fixed to the pulley 45.

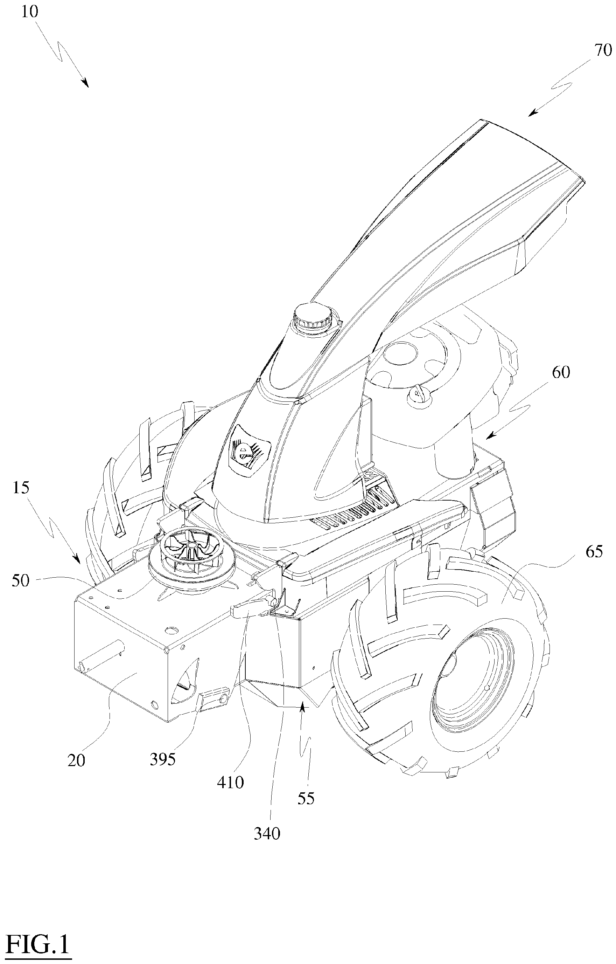

Going back to figure 1, the farming machine 10 in turn comprises a support frame 55, a motor 60 installed on the support frame 55 and at least one pair of wheels 65 rotatably associated with the support frame 55, which receive the rotary motion from the motor 60.

In the preferred embodiment illustrated in the figures, the farming machine 10 is a cultivator equipped with a pair of independent drive wheels 65 and with a pair of handlebars on which the control levers of the cultivator itself are arranged.

The handlebars and the levers are not illustrated in the drawings or described in greater detail since they are *per se* conventional.

As illustrated in figure 2, the support frame 55 is equipped with a box-shaped body 80, which comprises a pair of side walls 85, an upright 90 for joining the side walls 85, a lower wall 95, an upper wall 100 and a vertical wall 105.

The vertical wall 105 is fixed canti-levered to the upper wall 100 close to the rear portion of the latter.

In this document the terms "lower" and "upper" are meant to refer, respectively, to the proximal portion and the distal portion of the element considered, to the ground on which the farming machine rests. The term "vertical" indicates a component equipped with a longitudinal axis substantially perpendicular to the ground. Moreover, the terms "front" and "rear" should be interpreted based on the direction of normal forward motion (not reverse) of the farming machine.

The box-shaped body 80 is, for example, positioned in the front portion of the farming machine 10.

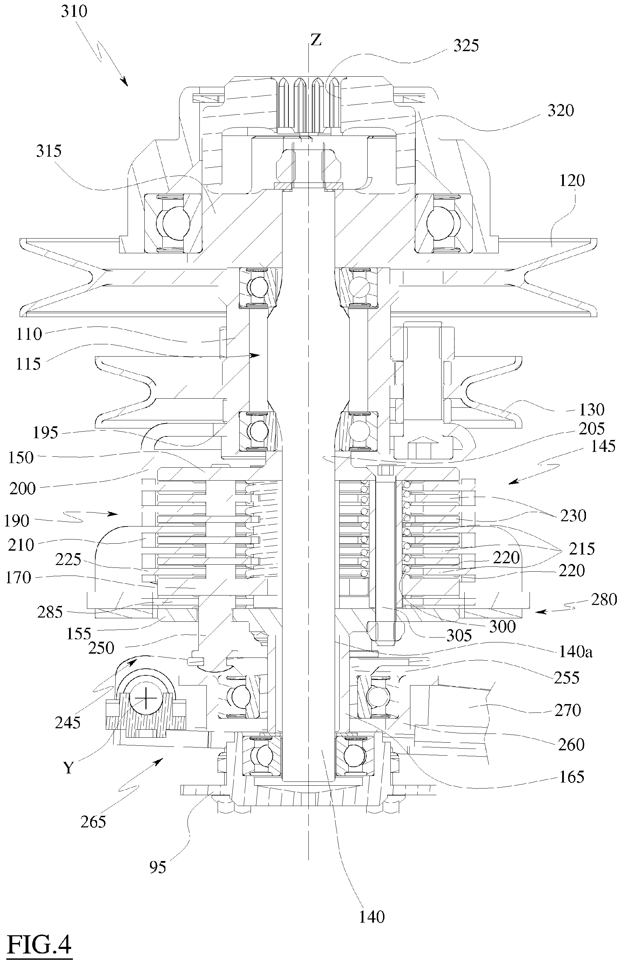

With reference to figure 4, the farming machine 10 comprises an input shaft 110 rotatably associated with the support frame 55, specifically to the box-shaped body 80, with respect to a rotation axis Z, which can for example be vertical.

However, this does not rule out the possibility that in an alternative embodiment the rotation axis Z can be oriented horizontally, i.e. substantially parallel to the ground.

The input shaft 110 can be internally hollow and therefore have an axial through cavity 115.

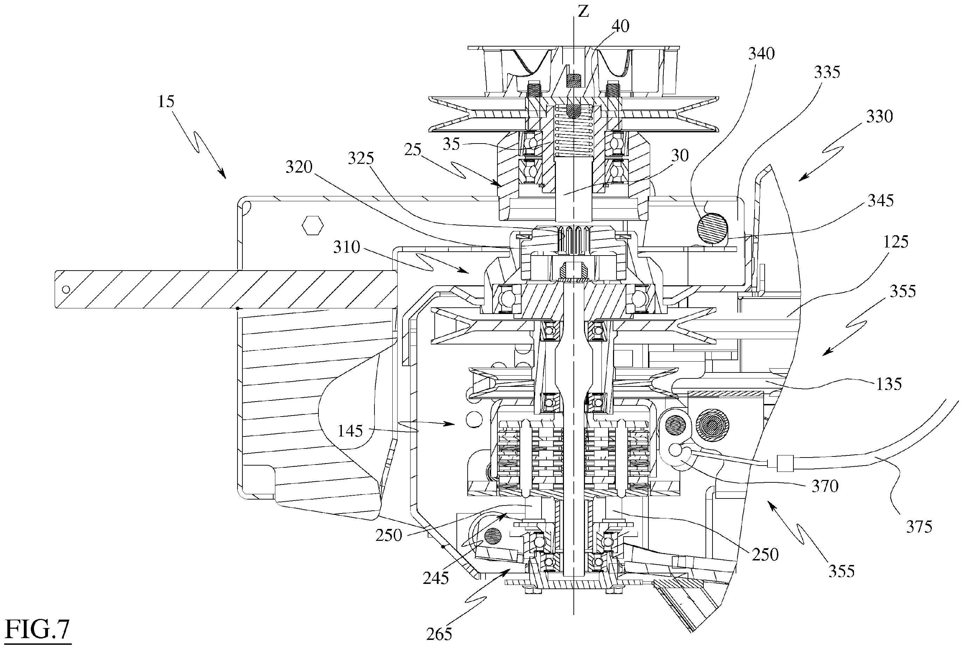

The farming machine 10 also comprises a first pulley 120 fitted to the input shaft 110 and connected through a belt 125 (see fig.7) to a drive shaft (not illustrated) of the motor 60.

The first pulley 120 can be fitted at an end of the input shaft 110, for example at the upper end.

The farming machine 10 also comprises a second pulley 130 fitted to the input shaft 110 and connected through a belt 135 to an actuation of the wheels 30.

For example, the second pulley 130 can be connected through the belt 135 to a hydraulic pump of a hydrostatic transmission for actuating the wheels 30 (not illustrated in the drawings).

The second pulley 130 can be fitted to the input shaft 110 close to the end of said input shaft 110 opposite to the one where the first pulley 120 is fitted.

The farming machine 10 also comprises an output shaft 140 rotatably associated with the support frame 55 with respect to an axis coaxial to the rotation axis Z of the input shaft 110.

Specifically, the output shaft 140 is rotatably associated with the box-shaped body 80 through a pair of bearings, one of which is housed in the lower wall 95 and one is housed in the upper wall 100.

The output shaft 140 can be inserted inside the axial through cavity 115 of the input shaft 110 and can be rotatably associated with it with respect to the rotation axis Z through a pair of bearings housed inside said axial cavity 115.

The output shaft 140 projects with respect to the input shaft 110 at both ends.

For example, the output shaft 140 extends, through a hole present in the upper wall 100, outside of the box-shaped body 80.

The farming machine 10 also comprises a clutch 145 configured to selectively transmit the rotary motion of the input shaft 110 to the output shaft 140.

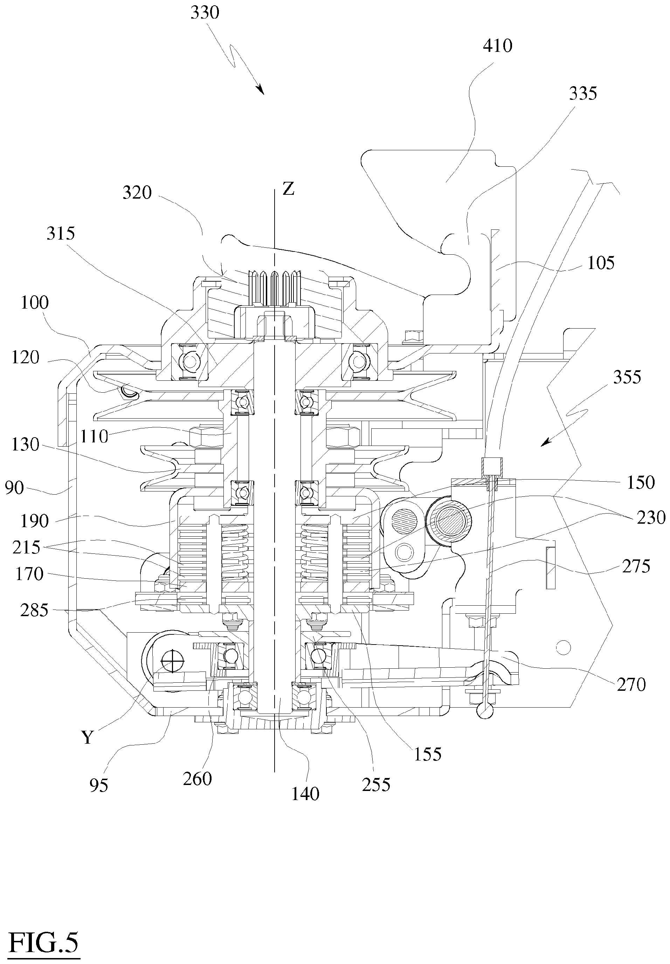

The clutch 145 can be actuated between a first position (illustrated in figure 5), in which it couples the output shaft 140 with the input shaft 110, and a second position (illustrated in figure 4), in which it decouples the output shaft 140 from the input shaft 110.

With particular reference to figure 4, the clutch 145 comprises a first plate 150 and a second plate 155 rotating as a unit with the output shaft 140.

The first plate 150 and the second plate 155 each comprise a central hole 151, 156 equipped with an inner grooved profile that is configured to be coupled with an outer grooved profile 140a made on a portion of the output shaft 140.

Said first plate 150 and second plate 155 sit on planes parallel to one another and perpendicular to the rotation axis Z (i.e. to the input shaft 110 and to the output shaft 140).

The second plate 155 sits on a spacer 165, which is coaxial to the output shaft 140 and is arranged between the second plate 155 and the lower bearing of the pair of bearings through which the output shaft 140 is rotatably associated with the support frame 55.

The clutch 145 comprises a driven disc 170 rotating as a unit with the output shaft 140.

The driven disc 170 comprises a central hole 175, inside which the output shaft 140 is snugly inserted, and a plurality of through holes 180, for example nine through holes 180, eccentric with respect to the central hole 175.

Moreover, the driven disc 170 is positioned between the first plate 150 and the second plate 155.

The clutch 145 comprises a plurality of pins 185, for example six pins 185, each of which is slidably inserted inside a corresponding through hole 180 of the driven disc 170 and is constrained at one end to the first plate 150 and at the opposite end to the second plate 155.

In this way, the driven disc 170 can slide with respect to the output shaft 140 along the rotation axis Z guided by the pins 185.

The clutch 145 is equipped with a bell 190 comprising a substantially flat bottorn wall 195 and a side wall 200 rising from the bottom wall 195.

The bell 190 is equipped with a central hole 205 inside which the end of the input shaft 110 opposite to the end where the first pulley 120 is located (i.e. the lower end of the input shaft 110) is inserted.

The bell 190 comprises a plurality of slots 210 formed in the side wall 200, having longitudinal axes parallel to the rotation axis Z.

The bell 190 rotates as a unit with the input shaft 110 and has a central axis coaxial to the rotation axis Z.

Moreover, the bell 190 is fixed to the second pulley 130, for example through threaded connection members inserted in suitable holes formed in the bottom wall 195, and rotates as a unit with it with respect to the rotation axis Z.

The bell 190 is arranged between the second pulley 130 and the second plate 155 and contains the first plate 150 inside it.

The driven disc 170 is outside of the bell 190.

The clutch 145 comprises a friction disc 215, rotating as a unit with the input shaft 110 and sitting on a plane perpendicular to the rotation axis Z.

The friction disc 215 is shaped like a flat annular disc, coaxial to the rotation axis Z and coated on both larger faces by a layer 220 of material having high friction coefficient.

The friction disc 215 is equipped with a plurality of tabs 225, for example substantially rectangular in shape, coplanar to the annular disc and arranged equally spaced apart along the outer perimeter of the friction disc 215.

Said tabs 225 are configured so as to insert snugly in the respective slots 210 of the bell 190 allowing only the sliding of the friction disc 215 in the direction of the longitudinal axes of the slots 210, i.e. of the rotation axis Z.

In this way, a connection is generated by obstruction between the bell 190 and the friction disc 215 capable of allowing the transfer of the rotary motion between the bell 190 and the friction disc 215, thus between the friction disc 215 and the first shaft 110.

In the preferred embodiment illustrated in the drawings, the clutch 145 comprises a plurality of friction discs 215 arranged between the first plate 150 and the driven disc 170, which in turn have further driven discs x between them.

The plurality of friction discs 215 and the further driven discs 230 form a disc pack of the clutch 145, which is contained inside the bell 190.

Each further driven disc 230 comprises a central hole 235 having a trilobed profile, inside which the output shaft 140 is inserted and a plurality of through holes 240, for example six through holes 240, arranged along a peripheral portion of the driven disc itself inside which the pins 185 of the clutch 145 are slidably inserted.

The clutch 145 comprises first actuation means 245 for pressing the driven disc 170 against the friction disc 215 so as to transmit the rotary motion between the input shaft 110 and the output shaft 140.

The first actuation means 245 comprise a pressure plate 250, for example shaped like a rod, which has an end adapted for contacting a portion, for example a portion of a lower surface, of the driven disc 170.

The pressure plate 250 is slidably inserted in a corresponding through hole formed in the second plate 155 along a sliding axis parallel to the rotation axis Z between a first position, in which it presses the driven disc 170 against the friction disc 215, and a second position, in which it does not act on the driven disc 170.

The pressure plate 250 rotates as a unit with the second plate 155, and thus with the output shaft 140.

For example, the pressure plate 250 can consist of 3 rods each of which has longitudinal axis substantially parallel to the rotation axis Z and that are equally spaced apart along an imaginary circumference coaxial to the rotation axis Z.

In this way, the thrust is evenly distributed over the driven disc 170 avoiding misalignments of the latter.

The first actuation means 245 comprise a first plate 255 to which the pressure plate 250 is fixed.

The first plate 255 is coaxial to the spacer 165 and rotates as a unit with the pressure plate 250, and therefore with the output shaft 140.

The first actuation means 245 also comprise a second plate 260, which is coaxial to the first plate 255 of the first actuation means 245 and is rotatably associated with it through a bearing.

The second plate 260 of the first actuation means 245 is, therefore, fixed with respect to the output shaft 140.

For example, the second plate 260 contains said bearing and at least one portion of the first plate 255.

The first actuation means 245 comprise control members 265, actuated manually, adapted for moving the second plate 260, and thus the pressure plate 250, in a direction parallel to the rotation axis Z.

The control members 265 comprise a lever 270, which at one end is hinged to the support frame 55 according to a hinging axis Y outside of the second plate 260 of the first actuation means 245 and sitting on a plane substantially perpendicular to the rotation axis Z.

The control members 265 comprise a flexible cable 275, which at one end is associated with the lever 270 and at the other end is associated with an actuation lever pivoted to a handlebar of the farming machine.

Furthermore, the control members 265 comprise a clutch adjustment mechanism, adapted for compensating for the variation in thickness of the friction discs due to the wearing of the material having high friction coefficient (not illustrated).

The farming machine 10 comprises braking means 280 adapted for counteracting the rotation of the output shaft 140 when the clutch 145 is in the second position B.

The braking means 280 comprise a braking disc 285 arranged between the driven disc 170 and the second plate 155 of the clutch 145.

The braking disc 285 sits on a plane substantially perpendicular to the rotation axis Z and is coaxial to the output shaft 140.

Moreover, the braking disc 285 is fixed to the support frame 55, for example to the box-shaped body 80, through a connection plate 290, which is fixed to the pair of side walls 85, for example through threaded connections.

Furthermore, the braking disc 285 is configured like a flat annular disc coated on both larger faces by a layer of material having high friction coefficient.

For example, the braking disc 285 is substantially identical to the friction disc 215.

The braking means 280 also comprise second actuation means 295 adapted for moving the driven disc 170 away from the friction disc 215 and for pressing said driven disc 170 against the braking disc 285.

The second actuation means 295 comprise a spring 300 arranged between the first plate 150 of the clutch 145 and the driven disc 170, which has a longitudinal axis parallel to the rotation axis Z and is adapted for exerting a force in the direction of the driven disc 170 moving away from the first plate 150.

The spring 300 can for example be a helical compression spring.

In the preferred embodiment, the second actuation means 295 comprise three springs 300 equally spaced apart along an imaginary circumference concentric to the rotation axis Z, each of which is inserted in a corresponding lobe of the central hole 235 having a trilobed profile of the further driven discs 230.

The spring 300 comprises a support 305 adapted for preventing the collapse by elastic instability of the spring itself.

The support 305 can for example be a bolt.

The farming machine 10 comprises a power take-off 310 associated with the output shaft 140 close to its end proximal to the second pulley 130, i.e. proximal to its upper end.

The power take-off 310 can for example be fitted to the output shaft 140 or alternatively be welded to it.

The power take-off 310 projects at least partially towards the outside of the box-shaped body 80 through the upper wall 100.

The power take-off 310 comprises a first hub 315 fitted onto the output shaft and a second hub 320 coupled with the first hub 315.

The second hub 320 is arranged above the first hub 315.

The second hub 320 comprises a central hole 325, coaxial to the rotation axis Z and equipped with a grooved profile.

The power take-off 310 can for example consist of an elastic coupling ring.

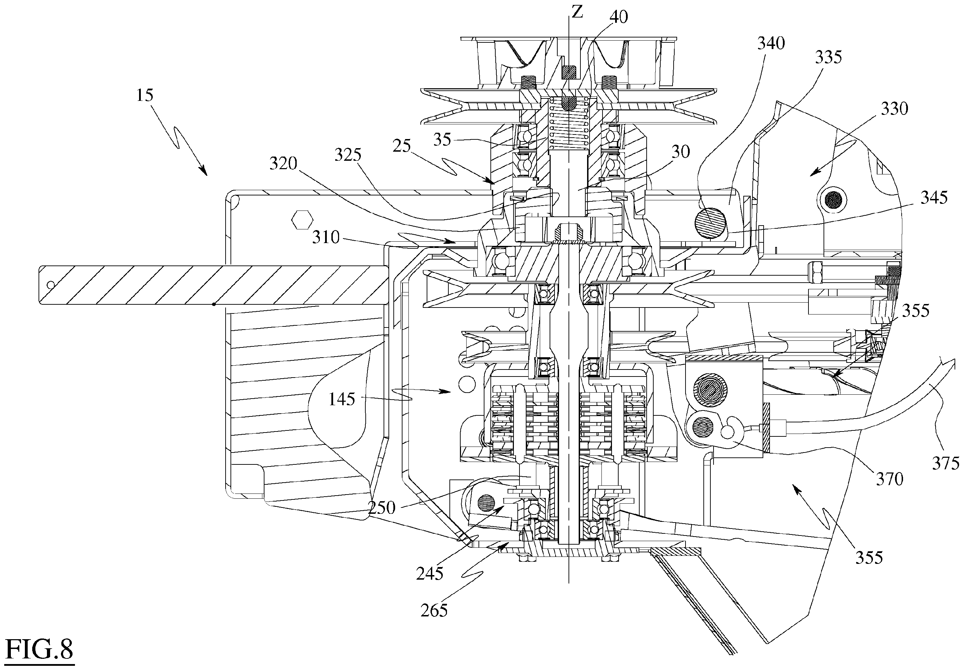

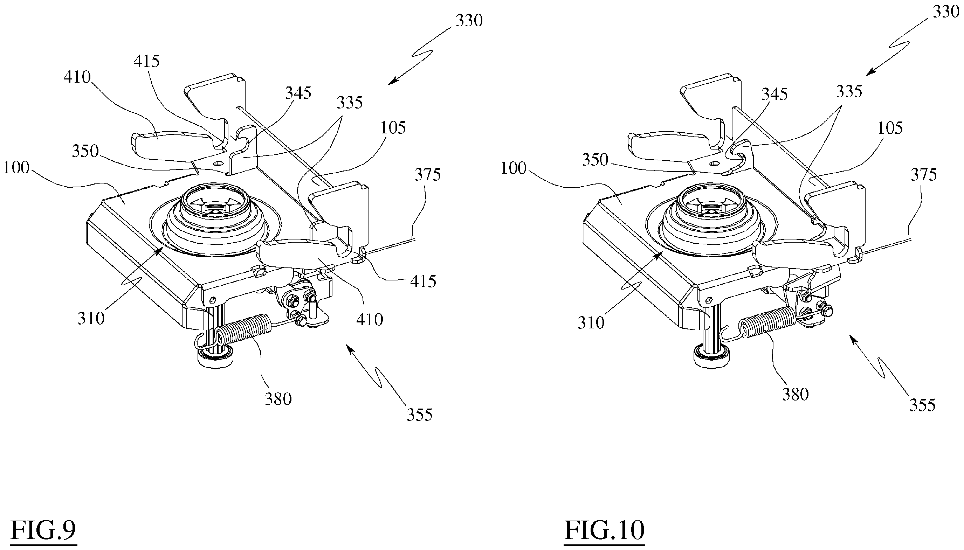

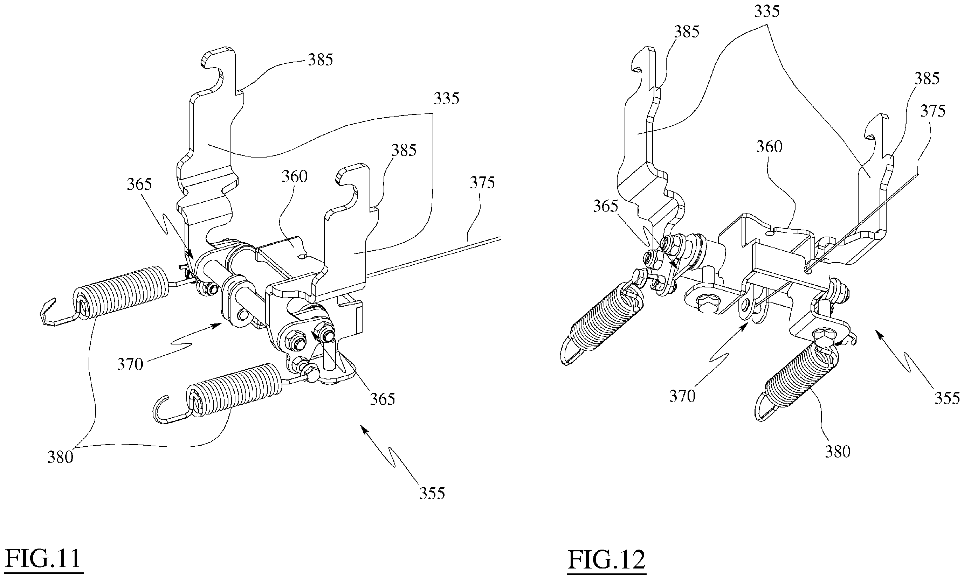

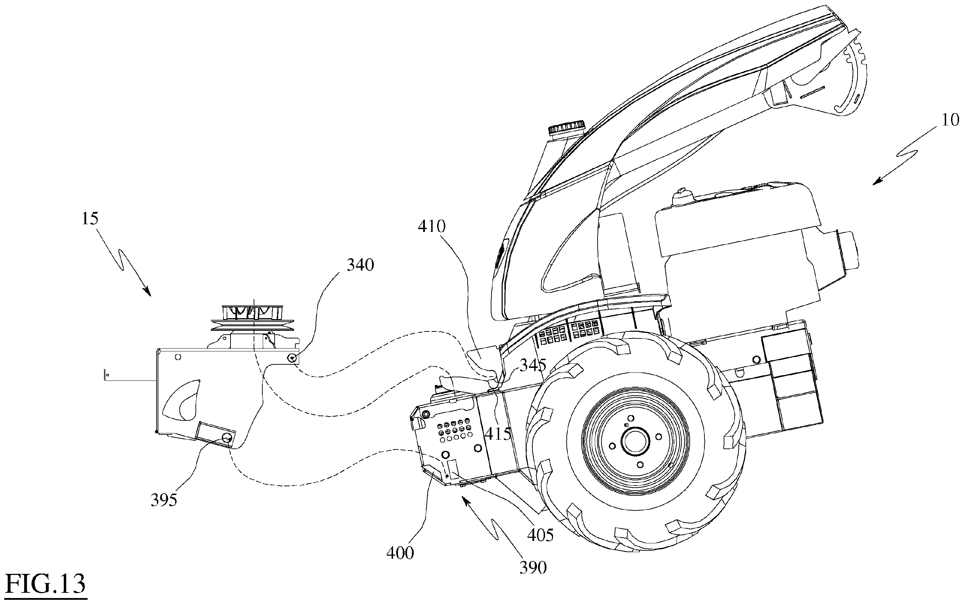

The farming machine 10 comprises a hooking and locking apparatus 330 of the tool 15 to the support frame 55 (reference should be made to figures 7 to 13).

The hooking and locking apparatus 330 comprises a hook 335 adapted for hooking a first abutment element 340 associated with the support case 20 of the tool 15.

The first abutment element 340 can for example consist of a bar, which extends from a side wall of the support case 20 to an opposite side wall and projects from said side walls towards the outside of the support case 20.

Such a bar is arranged with substantially horizontal longitudinal axis fixed to a side wall of the support case 20 and perpendicular to the longitudinal middle axis of the farming machine 10.

The hook 335 can for example consist of a plate, for example sitting on a substantially vertical plane, which has a U-shaped recess 345 with the concavity arranged horizontally and facing towards the front portion of the farming machine 10.

The hook 335 is slidably inserted, along an axis substantially parallel to the rotation axis Z, in a slot 350 formed in the support frame 55.

For example, the slot 350 is formed astride of the vertical wall 105 and of the upper wall 100 of the box-shaped body 80.

The hook 335 is actuated through control means 355, between a raised position, in which it is adapted for hooking the first abutment element 340 of the tool 15 keeping the engagement shaft 25 of the tool 15 decoupled from the power take-off 310, and a lowered position in which the first abutment element 340 is locked to the support frame 55 and the engagement shaft 25 is connected to the power take-off 310.

During the actuation of the hook 335 between the lowered position and the raised position the recess 345 of the hook 335 remains outside of the box-shaped body 80.

The control means 355 comprise a small frame 360 fixed to the support frame 55 and a first lever 365 hinged at one end to the small frame 360 and at an opposite end to the hook 335 according to parallel hinging axes, for example to a lower portion of the hook 335.

The control means 355 comprise a second lever 370, which at one end is fixed to the first lever 365 and the longitudinal axis of which is substantially perpendicular to the longitudinal axis of the first lever 365.

The control means 355 also comprise a flexible cable 375 adapted for being pulled to move the hook 335 from the raised position to the lowered position.

The flexible cable 375 is associated at one end with the second lever 370, for example the opposite end to that fixed to the first lever 365, and at the opposite end to a manual control lever hinged to a handlebar.

The control means 355 also comprise a spring 380 adapted for moving the hook 355 from the lowered position to the raised position.

The spring 380 is associated at one end with the first lever 365, for example at a different point from those where the hook 335 and the small frame 360 are hinged, and at the opposite end to the support frame 55.

The spring 380 can for example be a helical traction spring.

The hook 335 comprises a tooth 385 adapted for contacting the upper edge of the slot portion 350 formed in the vertical wall so as to stop the lifting caused by the spring 380 of the hook 355 towards the raised position C.

The hooking and locking apparatus 330 comprises a lower guide 390 adapted for receiving a second abutment element 395 of the tool 15 so as to keep the engagement shaft 25 coaxial to the power take-off 310 when the hook 335 is in raised position, and adapted for guiding the carrying along of the tool 15 during the movement of the hook 335 from the raised position to the lowered position.

The second abutment element 395 can for example consist of a pin fixed to a side wall of the support case 20 and arranged with longitudinal axis sitting on a substantially horizontal plane.

The second abutment element 395 can for example face towards the inside of the support case 20.

The lower guide 390 is arranged in the front-rear portion of a side wall 85.

The lower guide 390 comprises a first bar 400 having longitudinal axis inclined upwards and towards the front portion of the farming machine 10.

The lower guide 390 also comprises a second bar 405 positioned behind the first bar 400 and equipped with a substantially vertical longitudinal axis.

The first bar 400 and the second bar 405 in the point of minimum distance have a gap having width adapted for snugly receiving the second abutment element 395.

The first bar 400 can for example be configured like a trapezium-based prism in which the base sides of the trapezium are inclined like the longitudinal axis of the first bar itself, the side distal from the second bar 405 is substantially horizontal and the side proximal to the second bar 405 is substantially parallel to the longitudinal axis of said second bar.

Finally, the hooking and locking apparatus 330 comprises an upper guide 410 adapted for receiving the first abutment element 340 of the tool 15 and for guiding it towards the hook 335, when the hook 335 is in raised position.

The upper guide 410 comprises a throat 415 adapted for cooperating with the hook 335 so as to make a shape constraint that locks the first abutment element 340 to the support frame 55, when the hook 335 is in the lowered position.

The throat 415 is substantially U-shaped with longitudinal axis substantially parallel to the sliding axis of the hook 335.

The upper guide 410 can for example consist of a flat plate in which two facilitating profiles are formed that widen by moving away from the walls of the throat 415.

In the preferred embodiment, the farming machine 10 comprises two hooking and locking apparatuses 330, i.e. it comprises two hooks 335 slidably inserted in respective slots 350 each of which is symmetrically arranged with respect to a longitudinal middle plane of the farming machine 10 containing the rotation axis Z.

In such a preferred embodiment, the control means 355 comprise a pair of first levers 365, each hinged to a respective side of the small frame 360 and to a respective hook 335, which are connected through a connection rod that is coaxial to the hinging axes with the hooks 355. Moreover, the second lever 370 is fixed, in central position to said connection rod.

Furthermore, the machine is equipped with two lower guides 390 and two upper guides 410, symmetrically arranged with respect to a longitudinal middle plane of the farming machine 10 containing the rotation axis Z.

The operation of the farming machine 10 according to the invention is as follows.

When it is wished to install a tool 15 on the farming machine, the tool 15 is rested on the ground or on a suitable stand.

Thereafter, the farming machine 10 is made to advance towards the tool 15 forking the first abutment element 340 with the upper guide 410 and making the second abutment element 395 slide on the first bar of the lower guide 390.

The farming machine 10 is made to advance until the first abutment element 340 is in the recess 345 of the hook 335 and the second abutment element 395 is in contact with the second bar 405.

In such a configuration, the engagement shaft 25 of the tool is above the grooved central hole 325 of the power take-off310 and coaxial to it (i.e. to the rotation axis Z).

By actuating the flexible cable 375 of the control means 355, the hook 335 is taken from the raised position to the lowered position overcoming the force of the spring 380.

During the descent of the hook 335 it carries along the first abutment element 340 and the entire tool 15: the first abutment element 340 is taken all the way into the throat 415 where it is held laterally by the walls of the throat itself and at the top by the recess 345 of the hook 335.

Moreover, during the descent of the hook 335 the engagement shaft 25 is inserted in the central hole 325 of the power take-off 310 allowing the transmission of power from the motor 60 of the farming machine 10 to the tool 15.

If the grooved profile of the central hole 325 of the power take-off 310 is not aligned with the grooved profile of the first cylindrical body 30, the central hole 325 is rotated by actuating the clutch 145 (i.e. taking it into the first position) until the grooved profiles are aligned.

In this step the clutch 145 is not actuated and is in the second position: the driven disc 170 is kept pressed by the spring 300 against the braking disc 285 keeping the output shaft locked in rotation. Moreover, the further driven discs 230 are not pressed against the friction discs, so that the output shaft 140 is disconnected from the input shaft 110.

In order to make the tool 15 move, the clutch is actuated by taking it into the second position: the pressure plate 250 presses against the driven disc 170 overcoming the force of the spring 300. Now the driven disc 170 is no longer in contact with the braking disc 285, but presses against the friction disc 215 allowing the transmission of the motion from the input shaft 110 to the output shaft 140.

The invention thus conceived can undergo numerous modifications and variants, as long as they are comprised in the scope of the appended claims.

In practice, the materials used, as well as the contingent shapes and sizes, can be whatever according to the requirements as long as they do not depart from the scope of protection of the following claims.

## Claims

1. A farming machine (10) comprising:
- a support frame (55),
- a power take-off (310) rotatably associated with the support frame (55),
- a motor (60) mounted on the support frame (55) and adapted for setting the input shaft (110) in rotation,
- a clutch (145) able to be actuated between a first position, in which it couples the motor (60) with the power take-off (310), and a second position, in which it decouples the motor (60) from the power take-off (310), and
- braking means (280) adapted for counteracting the rotation of the power take-off (310) when the clutch (145) is in the second position,
**characterized in that** the clutch (145) comprises:
- an input shaft (110) connected to the motor (60),
- an output shaft (140) connected to the power take-off (310),
- at least one driven disc (170) rotating as a unit with the output shaft (140),
- at least one friction disc (215) rotating as a unit with the input shaft (110), and
- first actuation means (245) for pressing the driven disc (170) against the friction disc (215),
and wherein the braking means (280) are configured to automatically start working when the clutch (145) is in the second position.

2. A farming machine (10) according to claim 1, wherein the braking means (280) comprise:
- a braking disc (285) fixed to the support frame (55), and
- second actuation means (295) adapted for moving the driven disc (170) away from the friction disc (215) and for pressing it against the braking disc (285).

3. A farming machine (10) according to claim 2, wherein the second actuation means (295) comprise at least one spring (300) adapted for exerting a force in a direction parallel to the output shaft (140).

4. A farming machine (10) according to any of the previous claims, wherein the first actuation means (245) comprise a pressure plate (250) adapted for rotating as a unit with the output shaft (140) and control members adapted for moving said pressure plate (250) in a direction parallel to the axis of the output shaft (140).

5. A farming machine (10) according to any one of the previous claims, wherein the clutch (145) comprises a plurality of further driven discs (230) rotating as a unit with the output shaft (140) and separated two-by-two by means of at least one friction disc (215) rotating as a unit with the input shaft (110).

6. A farming machine (10) according to claim 5, wherein the friction discs (215) are housed inside a coaxial containment bell (190) fixedly connected to the input shaft (110).

7. A farming machine (10) according to any one of previous claims, wherein the input shaft (110) has an axial cavity (115) and wherein at least one portion of the output shaft (140) is rotatably contained in said axial cavity (115) of the input shaft (110).

8. A farming machine (10) according to any one of the previous claims, comprising at least one hooking and locking apparatus (330) of a tool (15) on the support frame (55).

9. A farming machine (10) according to claim 8, wherein the hooking and locking apparatus (330) comprises at least one hook (335) adapted for occupying a raised position in which it is adapted for hooking a first abutment element (340) of the tool (15) keeping an engagement shaft (25) of the tool (15) separate from the power take-off (310), and control means (355) adapted for moving the hook (335) from said raised position to a lowered position, pulling the tool (15) so as to connect the engagement shaft (25) to the power take-off (310).

10. A farming machine (10) according to claim 9, wherein the hooking and locking apparatus (330) comprises at least one lower guide (390) adapted for receiving a second abutment element (395) of the tool (15) so as to keep the engagement shaft (25) coaxial to the output shaft (140) when the hook (335) is in raised position, and adapted for guiding the pulling of the tool (15) during the movement of the hook (335) from the raised position to the lowered position.

11. A farming machine (10) according to claim 10, wherein the hooking and locking apparatus (330) comprises at least one upper guide (410) adapted for receiving the first abutment element (395) of the tool (15) and for guiding it towards the hook (335), when the hook (335) is in raised position.

12. A farming machine (10) according to claim 11, wherein the upper guide (410) comprises a throat (415) adapted for cooperating with the hook (335) so as to make a shape constraint that locks the first abutment element (395) to the support frame (55), when the hook (335) is in the lowered position.

## Patentansprüche

1. Landwirtschaftsgerät (10), das umfasst:
- einen Tragrahmen (55),
- ein Zapfwellengetriebe (310), das mit dem Tragrahmen (55) drehbar verbunden ist,
- einen Motor (60), der am Tragrahmen (55) montiert ist und geeignet ist, die Antriebswelle (110) in Rotation zu versetzen,
- eine Kupplung (145), die in der Lage ist, zwischen einer ersten Position, in der sie den Motor (60) mit dem Zapfwellengetriebe (310) koppelt, und einer zweiten Position, in der sie den Motor (60) vom Zapfwellengetriebe (310) entkoppelt, betätigt zu werden und
- Bremsmittel (280), die geeignet sind, der Drehung des Zapfwellengetriebes (310) entgegenzuwirken, wenn sich die Kupplung (145) in der zweiten Position befindet,
**dadurch gekennzeichnet, dass** die Kupplung (145) umfasst:
- eine Antriebswelle (110), die mit dem Motor (60) verbunden ist
- eine Abtriebswelle (140) die mit dem Zapfwellengetriebe (310) verbunden ist,
- mindestens eine angetriebene Scheibe (170), die als Einheit mit der Abtriebswelle (140) rotiert,
- mindestens eine Reibscheibe (215) die als Einheit mit der Antriebswelle (110) rotiert, und
- erste Betätigungsmittel (245), um die angetriebene Scheibe (170) gegen die Reibscheibe (215) zu drücken,
und wobei die Bremsmittel (280) so konfiguriert sind, dass sie automatisch zu arbeiten beginnen, wenn sich die Kupplung (145) in der zweiten Position befindet.

2. Landwirtschaftsgerät (10) gemäß Anspruch 1, bei dem die Bremsmittel (280) umfassen:
- eine Bremsscheibe (285), die am Tragrahmen (55) befestigt ist, und
- zweite Betätigungsmittel (295), die geeignet sind, die angetriebene Scheibe (170) von der Reibscheibe (215) wegzubewegen und sie gegen die Bremsscheibe (285) zu drücken.

3. Landwirtschaftsgerät (10) gemäß Anspruch 2, bei dem die zweiten Betätigungsmittel (295) mindestens eine Feder (300) umfassen, die geeignet ist, eine Kraft in einer Richtung parallel zur Abtriebswelle (140) auszuüben.

4. Landwirtschaftsgerät (10) gemäß einem der vorangegangenen Ansprüche, bei dem die ersten Betätigungsmittel (245) eine Druckplatte (250), die geeignet ist, sich als Einheit mit der Abtriebswelle (140) zu drehen, und Steuerelemente umfassen, die geeignet sind, die Druckplatte (250) in eine Richtung parallel zur Achse der Abtriebswelle (140) zu bewegen.

5. Landwirtschaftsgerät (10) gemäß einem der vorangegangenen Ansprüche, bei dem die Kupplung (145) eine Vielzahl von weiteren angetriebenen Scheiben (230) umfasst, die sich als Einheit mit der Abtriebswelle (140) drehen und mittels mindestens einer Reibscheibe (215), die als Einheit mit der Antriebswelle (110) rotiert, paarweise getrennt werden.

6. Landwirtschaftsgerät (10) gemäß Anspruch 5, bei dem die Reibscheiben (215) in einer koaxialen Rückhalteglocke (190) untergebracht sind, die fest mit der Antriebswelle (110) verbunden ist.

7. Landwirtschaftsgerät (10) gemäß einem der vorangegangenen Ansprüche, bei dem die Antriebswelle (110) einen axialen Hohlraum (115) aufweist und wobei mindestens ein Teil der Abtriebswelle (140) drehbar in dem axialen Hohlraum (115) der Antriebswelle (110) enthalten ist.

8. Landwirtschaftsgerät (10) gemäß einem der vorangegangenen Ansprüche, das mindestens einer Einhak- und Verriegelungsvorrichtung (330) eines Werkzeugs (15) am Tragrahmen (55) umfasst.

9. Landwirtschaftsgerät (10) gemäß Anspruch 8, bei dem die Einhak- und Verriegelungsvorrichtung (330) mindestens einen Haken (335) umfasst, der geeignet ist, eine angehobene Position einzunehmen, in der er geeignet ist, in ein erstes Anschlagelement (340) des Werkzeuges (15) einzuhaken, wobei eine Eingriffswelle (25) des Werkzeuges (15) vom Zapfwellengetriebe (310) entfernt gehalten wird, und Steuermittel (355) umfasst, die geeignet sind, den Haken (335) von der angehobenen Position in eine abgesenkte Position zu verschieben, wobei das Werkzeug (15) so gezogen wird, dass es die Eingriffswelle (25) mit dem Zapfwellengetriebe (310) verbindet.

10. Landwirtschaftsgerät (10) gemäß Anspruch 9, bei dem die Einhak- und Verriegelungsvorrichtung (330) mindestens eine untere Führung (390) umfasst, die geeignet ist, ein zweites Anschlagelement (395) des Werkzeugs (15) aufzunehmen, um die Eingriffswelle (25) koaxial zur Abtriebswelle (140) zu halten, wenn sich der Haken (335) in der angehobenen Position befindet, und die geeignet ist, das Ziehen des Werkzeugs (15) während der Bewegung des Hakens (335) von der angehobenen Position zur abgesenkten Position zu führen.

11. Landwirtschaftsgerät (10) gemäß Anspruch 10, bei dem die Einhak- und Verriegelungsvorrichtung (330) mindestens eine obere Führung (410) umfasst, die geeignet ist, das erste Anschlagelement (395) des Werkzeugs (15) aufzunehmen und es in Richtung des Hakens (335) zu führen, wenn sich der Haken (335) in angehobener Position befindet.

12. Landwirtschaftsgerät (10) gemäß Anspruch 11, bei dem die obere Führung (410) eine Kehle (415) umfasst, die geeignet ist, mit dem Haken (335) zusammenzuwirken um einen Formzwang zu bilden, der das erste Anschlagelement (395) mit dem Tragrahmen (55) verriegelt, wenn der Haken (335) in der abgesenkten Position ist.

## Revendications

1. Machine agricole (10) comprenant :
- un châssis de support (55),
- une prise de force (310) associée de manière rotative au cadre de support (55),
- un moteur (60) monté sur le châssis de support (55) et adapté pour mettre l'arbre d'entrée (110) en rotation,
- un embrayage (145) pouvant être actionné entre une première position, dans laquelle il couple le moteur (60) avec la prise de force (310), et une deuxième position, dans laquelle il découple le moteur (60) de la prise de force (310), et
- des moyens de freinage (280) adaptés pour contrecarrer la rotation de la prise de force (310) lorsque l'embrayage (145) est dans la deuxième position, **caractérisé en ce que** l'embrayage (145) comprend :
- un arbre d'entrée (110) relié au moteur (60),
- un arbre de sortie (140) relié à la prise de force (310),
- au moins un disque entraîné (170) tournant comme une unité avec l'arbre de sortie (140),
- au moins un disque de friction (215) tournant comme une unité avec l'arbre d'entrée (110), et
- des premiers moyens d'actionnement (245) permettant de presser le disque entraîné (170) contre le disque de friction (215),
et dans lequel les moyens de freinage (280) sont configurés pour commencer à fonctionner automatiquement lorsque l'embrayage (145) est dans la deuxième position.

2. Machine agricole (10) selon la revendication 1, dans laquelle les moyens de freinage (280) comprennent :
- un disque de freinage (285) fixé au châssis de support (55), et
- des deuxièmes moyens d'actionnement (295) adaptés pour éloigner le disque entraîné (170) du disque de friction (215) afin de le presser contre le disque de freinage (285).

3. Machine agricole (10) selon la revendication 2, dans laquelle les deuxièmes moyens d'actionnement (295) comprennent au moins un ressort (300) adapté pour exercer une force dans une direction parallèle à l'arbre de sortie (140).

4. Machine agricole (10) selon l'une quelconque des revendications précédentes, dans laquelle les premiers moyens d'actionnement (245) comprennent une plaque de pression (250) adaptée pour tourner comme unité avec l'arbre de sortie (140) et des éléments de commande adaptés pour déplacer ladite plaque de pression (250) dans une direction parallèle à l'axe de l'arbre de sortie (140).

5. Machine agricole (10) selon l'une quelconque des revendications précédentes, dans laquelle l'embrayage (145) comprend une pluralité d'autres disques entraînés (230) tournant comme unité avec l'arbre de sortie (140) et séparés deux par deux au moyen d'au moins un disque de friction (215) tournant comme unité avec l'arbre d'entrée (110).

6. Machine agricole (10) selon la revendication 5, dans laquelle les disques de friction (215) sont logés à l'intérieur d'une cloche de confinement coaxiale (190) reliée de manière fixe à l'arbre d'entrée (110).

7. Machine agricole (10) selon l'une quelconque des revendications précédentes, dans laquelle l'arbre d'entrée (110) a une cavité axiale (115) et dans laquelle au moins une partie de l'arbre de sortie (140) est contenue de manière rotative dans ladite cavité axiale (115) de l'arbre d'entrée (110).

8. Machine agricole (10) selon l'une quelconque des revendications précédentes, comprenant au moins un dispositif d'accrochage et de verrouillage (330) d'un outil (15) sur le châssis de support (55).

9. Machine agricole (10) selon la revendication 8, dans laquelle le dispositif d'accrochage et de verrouillage (330) comprend au moins un crochet (335) adapté pour occuper une position relevée dans laquelle il est adapté pour accrocher un premier élément de butée (340) de l'outil (15) en maintenant un arbre d'engagement (25) de l'outil (15) séparé de la prise de force (310), et des moyens de commande (355) adaptés pour déplacer le crochet (335) de ladite position relevée à une position abaissée, tirant l'outil (15) de manière à connecter l'arbre d'engagement (25) à la prise de force (310).

10. Machine agricole (10) selon la revendication 9, dans laquelle le dispositif d'accrochage et de verrouillage (330) comprend au moins un guide inférieur (390) adapté pour recevoir un deuxième élément de butée (395) de l'outil (15) de manière à maintenir l'arbre d'engagement (25) coaxial à l'arbre de sortie (140) lorsque le crochet (335) est en position levée, et adapté pour guider la traction de l'outil (15) pendant le mouvement du crochet (335) de la position levée à la position abaissée.

11. Machine agricole (10) selon la revendication 10, dans laquelle le dispositif d'accrochage et de verrouillage (330) comprend au moins un guide supérieur (410) adapté pour recevoir le premier élément de butée (395) de l'outil (15) et pour le guider vers le crochet (335), lorsque le crochet (335) est en position relevée.

12. Machine agricole (10) selon la revendication 11, dans laquelle le guide supérieur (410) comprend une gorge (415) adaptée pour coopérer avec le crochet (335) de manière à réaliser une contrainte de forme qui verrouille le premier élément de butée (395) sur le châssis de support (55), lorsque le crochet (335) est dans la position abaissée.
